# EUROPEAN PATENT APPLICATION

(11) **EP 4 644 309 A1**
(43) Date of publication of application: **05.11.2025**
(21) Application number: 23908911.3
(22) Date of filing: 19.04.2023
(51) Int. Cl.: B66B 23/00

(54) **MODERNIZATION ESCALATOR**

(30) Priority: 30.12.2022 CN 202211725528
(71) Applicant: Hanson Lift (Suzhou) Co., Ltd., Suzhou, Jiangsu 215500 (CN)
(72) Inventor: ZHU, Xueming, Suzhou, Jiangsu 215500 (CN); ZHANG, Yunlong, Suzhou, Jiangsu 215500 (CN); NIU, Ziyu, Suzhou, Jiangsu 215500 (CN)
(74) Representative: Arnold & Siedsma
(86) International application number: PCT/CN2023/089183
(87) International publication number: WO 2024/138961

(57) **Abstract**

A modernization escalator, which is assembled with an original truss of an original escalator. The original truss is provided with a plurality of transverse rod pieces. The modernization escalator comprises a truss assembly and a plurality of escalator components that are assembled with the truss assembly; the truss assembly comprises a lower machine room, a lower steering section, a middle section group, an upper steering section, and an upper machine room; the transverse width of the truss assembly is smaller than the transverse width of the interior of the original truss, and when the truss assembly is embedded into the original truss, the truss assembly avoids the traverse rod pieces; the middle section group is formed by connecting a plurality of middle sections end to end; each middle section comprises an upper flat body, the upper flat body is provided with a plurality of groups of vertical rods, and the vertical rods extend out of the bottom of the upper flat body to form an extension structure; the upper flat bodies of the middle sections are connected end to end to form the middle section group. According to the modernization escalator, an escalator can be modernized while an original truss is reserved, thereby reducing modernization costs and improving the modernization efficiency.

## Description

The present application claims priority to the Chinese Patent Application No. 202211725528.6, titled "MODERNIZATION ESCALATOR", filed on December 30, 2022 with the China National Intellectual Property Administration, which is incorporated herein by reference in its entirety.

### FIELD

The present application relates to the technical field of escalators, and in particular to a modernization escalator.

### BACKGROUND

Escalators are a type of electrical equipment widely used in public places. An escalator consists of components including a truss, stairs, stair guide rails, stair chains, a traction machine, skirt plates, inner and outer cover plates, a handrail system, and an electrical control system, etc.. Most of these components are installed in combination with the truss. The truss, which has functions of load-bearing and supporting, is the basic component of the escalator and also the component of the escalator that has the largest volume and weight.

The existing escalator is generally designed together with the building and is adaptively installed to the building. An upper end and a lower end of the original truss are usually embedded in different floors of the building. When the escalator is upgraded and replaced, it is necessary to completely dismantle the original escalator and then a new escalator can be installed. However, dismantling the original truss is difficult, which may easily cause damage to the building, resulting in a time-consuming and labor-intensive upgrading and a high cost.

Therefore, there is a need in the art for an escalator, which can be upgraded and replaced based on the original truss in order to improve the upgrading and replacement efficiency of escalator and reduce costs.

### SUMMARY

In view of above, a main object of the present application is to provide an upgraded escalator, which includes a truss assembly including multiple sections embedded into the original truss, other components of the original escalator are installed in combination with the truss assembly, so as to upgrade the escalator without dismantling the original truss and middle transverse bar members thereof.

To achieve the object above, an upgraded escalator is provided in the present application, which is installed in combination with the original truss of the original escalator, the original truss is provided with multiple transverse bar members, and the upgraded escalator includes: a truss assembly and multiple components of the upgraded escalator installed in combination with the truss assembly and including a lower machine room, a lower turning section, a middle section group, an upper turning section, and an upper machine room, where the truss assembly has a transverse width less than an inner transverse width of the original truss, and when the truss assembly is embedded into the original truss, the truss assembly can avoid multiple traverse rod members; the middle section group consists of multiple middle sections, which are connected to each other in an end-to-end manner; and each of multiple middle sections includes an upper flattened body, the upper flattened body has multiple sets of upright bars, multiple sets of upright bars extend beyond a bottom of the upper flattened body to form multiple extension structures, and the upper flattened bodies of multiple middle sections are connected in an end-to-end manner to form the middle section group.

In an embodiment, the upper flattened body is of a longitudinal rectangular structure, which is composed of upper longitudinal bars on two upper sides of the upper flattened body, lower longitudinal bars on two lower sides of the upper flattened body, multiple sets upright bars; and longitudinal rectangular structures at two sides and multiple transverse bar members form a groove structure that is opened upwards.

In an embodiment, multiple supplementary chord members and multiple diagonal members are installed among multiple extension structures; and multiple supplementary chord members and multiple diagonal members are screw rod assemblies or structural components that are able to implement a tension function.

In an embodiment, upper connecting lugs are provided at two sides of two upper ends of each of multiple middle sections, respectively, and lower connecting lugs are provided at two sides of two lower ends of each of multiple middle sections, respectively;
multiple middle sections are connected to each other through the upper connecting lugs and the lower connecting lugs in combination with bolt assemblies, and the middle sections located at both ends of the middle section group are respectively connected to the lower turning section and the upper turning section through the upper connecting lugs and the lower connecting lugs in combination with bolt assemblies.

In an embodiment, bottom ends of the extension structures that are spaced apart are connected to each other by lower longitudinal bars, and longitudinal opening areas, which are opened downwards, are provided among extension structures.

In an embodiment, bottom portions of multiple sets of upright bars are connected to multiple extension bars to form the extension structures.

In an embodiment, the multiple extension bars below bottoms of the upper flattened bodies are offset with the upright bars on the upper flattened bodies, multiple extension bars are connected to and fixed to the lower upright bars of the upper flattened bodies by welding or fasteners, and the extension bars are connected to the upright bars of the upper flattened bodies in an offset manner.

In an embodiment, auxiliary connection assemblies are installed among the extension structures.

In an embodiment, upper surfaces of the upper longitudinal bars are connected to multiple support components, which extends outwardly, by welding or fasteners, or, the upper surfaces of the upper longitudinal bars are connected to one support component, which has a strip shape and extends outwardly, by welding or fasteners; and
filling members are installed on upper surfaces or lower surfaces of multiple support components, the adjustors are support screw or spacer, and multiple middle sections are installed on the original truss by the filling members.

In an embodiment, filling members are provided on upper surfaces or lower surfaces the lower longitudinal bars, the filling members are support screw or spacer, and multiple middle sections are installed on the transverse bar members by the filling members.

In an embodiment, the upper longitudinal bars and the lower longitudinal bars are angle steels, rectangular tubes, or other profiles, and the upper surfaces of the upper longitudinal bars are connected to multiple g support components, which extends outwardly, by welding or fasteners;

the support components are steel plate and side edges of the support components extend away from multiple middle sections; and
filling members are installed on upper surfaces or lower surfaces of multiple support components, the filling members are support screws or spacers, and multiple middle sections are installed on the original truss with the filling members.

In an embodiment, the upper longitudinal bars and the lower longitudinal bars are angle steels, rectangular tubes, or other profiles, side surfaces of the upper longitudinal bars are connected to the support components, which extends outwardly, by welding or fasteners, and the support components are angle steels or other profiles.

In an embodiment, the upper longitudinal bars are C-shaped steel or T-shaped steel; and when the upper longitudinal bars are C-shaped steel, the upper longitudinal bars are opened downwards, and when the upper longitudinal bars are T-shaped steel, side edges of the upper longitudinal bars extend away from multiple middle sections.

In an embodiment, angle steels or L-shaped structural components are provided at end portions of the lower machine room and the upper machine room, so as to provide support when the lower machine room and the upper machine room are placed into the original truss.

In an embodiment, any two adjacent ones of the lower machine room, the lower turning section, multiple flatten middle sections, the upper turning section and the upper machine room are connected by multiple screw assemblies, multiple screw assemblies include multiple upper connecting rods, multiple lower connecting rods, and multiple diagonal members;

two ends of each of multiple upper connecting rods are respectively connected to upper sides of end portions of two adjacent sections, and two ends of each of multiple lower connecting rods are respectively connected to lower sides of end portions of two adjacent sections;
each of multiple diagonal members is obliquely arranged between end portions of two corresponding sections; and
one end of each of multiple diagonal members is connected to a corresponding one of multiple upper connecting rods through an upper connector, and the other end of each of multiple diagonal members is connected to a corresponding one of multiple lower connecting rods through a lower connector; or one end of each of multiple diagonal members is connected to an upper side of an end portion of one section, and the other end of each of multiple diagonal members is connected to a lower side of an end portion of another section; and an inclination direction of each of multiple diagonal members is variable according to requirements of structural load.

Compared with the existing technology, the upgraded escalator disclosed in the present application has the following advantages: the upgraded escalator can be upgraded while the original truss can be kept without dismantling middle transverse bar members thereof, thereby reducing the upgrading cost, improving the upgrading efficiency, and maintaining the mechanical strength of the original truss to the maximum extent. The middle sections are connected to each other in a gapless manner, and the middle sections located at two ends are also connected to the upper turning section and the lower turning section, respectively, in a gapless manner, which increases the connection strength and connection accuracy of sections. During on-site installation, there is no need to adjust the relative positions of sections, which reduces installation difficulty and improves work efficiency. In addition, the following technical solution is further provided in the present application: any two adjacent ones of the lower machine room, the lower turning section, the flatten middle sections, the upper turning section and the upper machine room are further connected by the screw assemblies (the screw assemblies include the upper connecting rods, the lower connecting rods, and the diagonal members), and thus the distances between sections are variable by an adjustable structure. Therefore, on the premise of ensuring the connection strength of each section, the flexibility during installation and construction is increased, and the interference between each section and the transverse bar members of the original truss during the installation process can be completely avoided, which ensures smooth installation and thus the safe and stable operation of the escalator after upgrading.

### BRIEF DESCRIPTION OF THE DRAWINGS

For more clearly illustrating the technical solutions in the embodiments of the present application or in the conventional technology, drawings referred to for describing the embodiments or the conventional technology will be briefly described hereinafter. Apparently, the drawings in the following description are only multiple examples of the present application, and for those skilled in the art, other drawings may be obtained based on these drawings without any creative efforts.
FIG. 1 is a schematic structural view of an original truss after other components of an original escalator have been removed.
FIG. 2 is a schematic structural view of a truss assembly of a upgraded escalator according to the present application.
FIG. 3 is a schematic structural view of a middle section of the truss assembly.
FIG. 4 is a front view of the original truss.
FIG. 5A is a side view of the middle section.
FIG. 5B is a side view of the middle section at which an auxiliary connecting assembly is installed.
FIG. 6 is a front view of the middle section.
FIG. 7A is a schematic view showing a first embodiment of a connection of the middle section with the original truss.

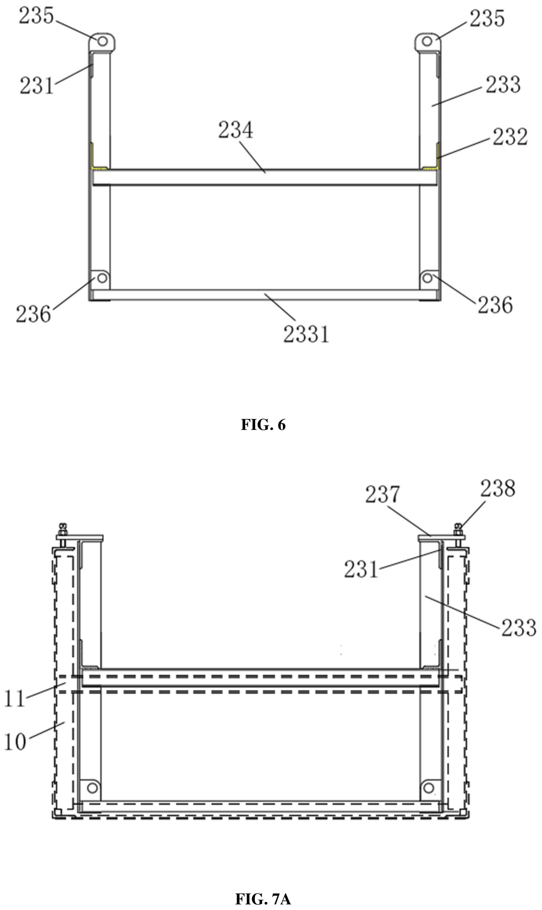

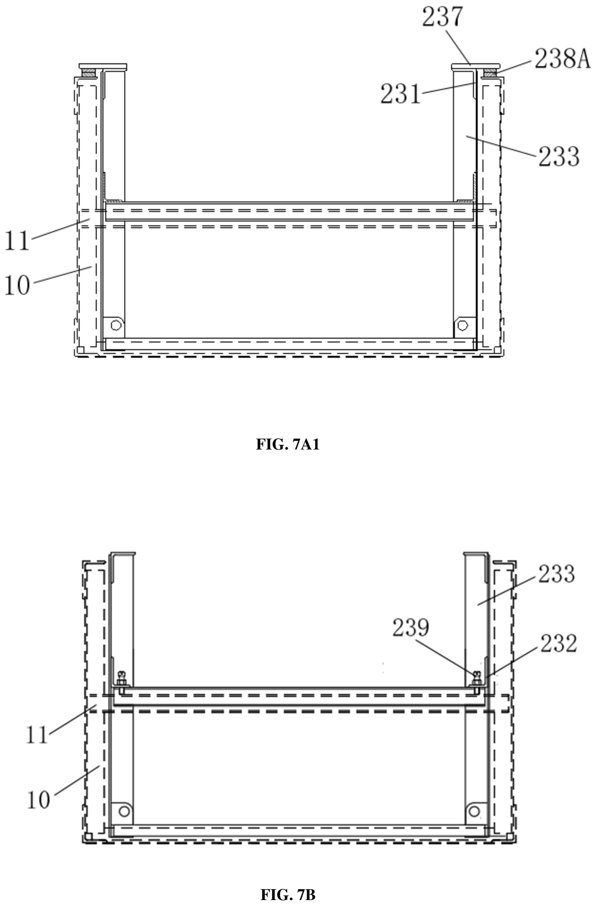

FIG. 7A1 is a schematic view showing a variant of the first embodiment of the connection of the middle section with the original truss.

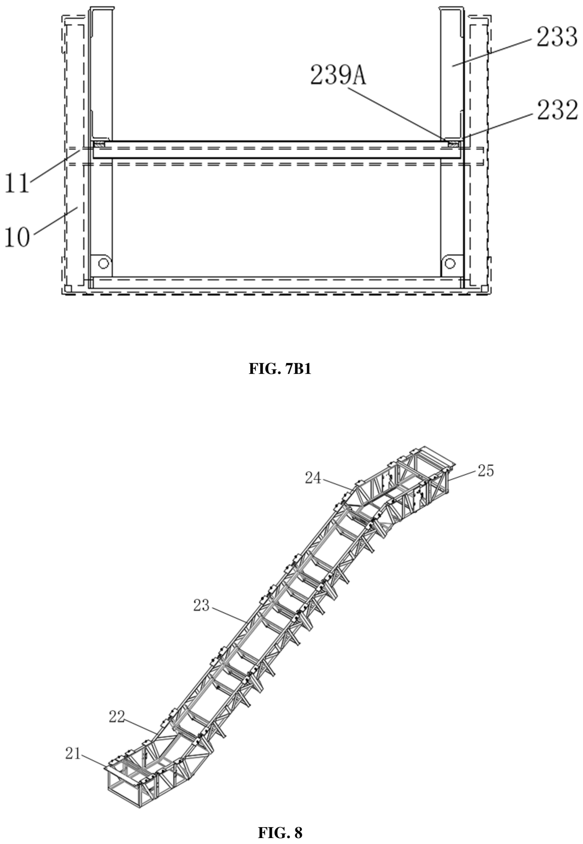

FIG. 7B is a schematic view showing a second embodiment of the connection of the middle section with the original truss.
FIG. 7B1 is a schematic view showing a variant of the second embodiment of the connection of the middle section with the original truss.
FIG. 8 is a schematic structural view of the truss assembly after being assembled and installed.

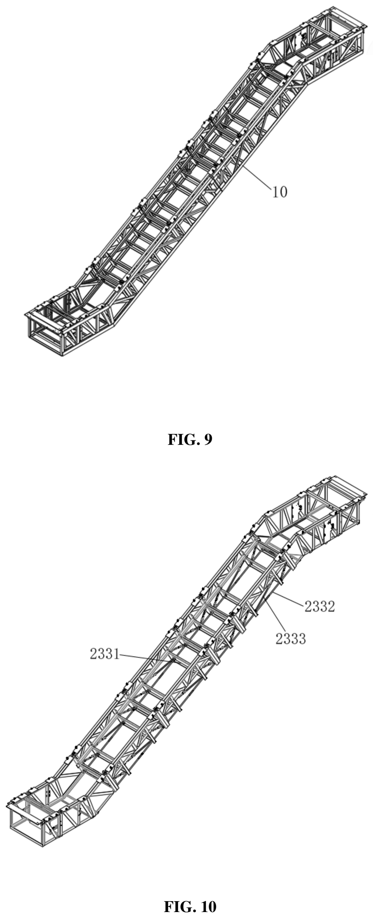

FIG. 9 is a schematic structural view of the truss assembly installed in the original truss.
FIG. 10 is a schematic structural view of the truss assembly installed with a supplementary chord member and a diagonal member.

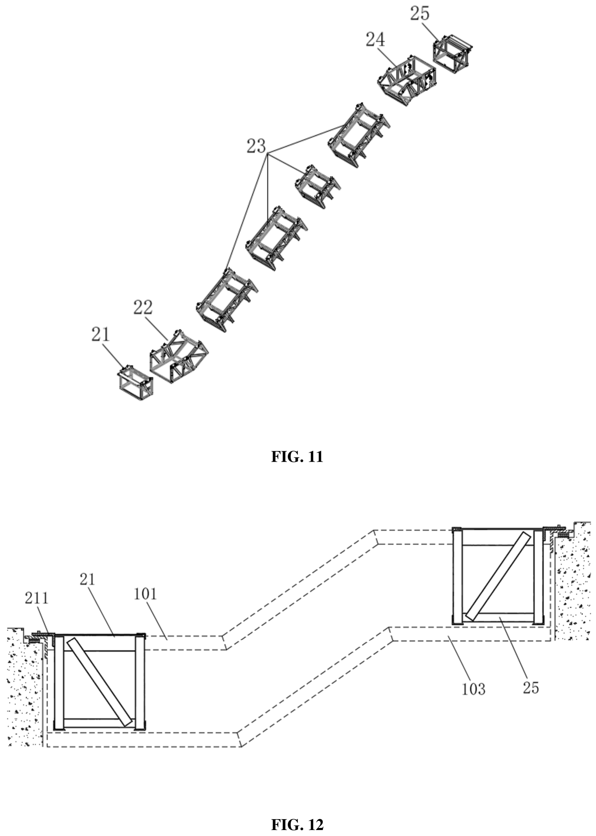

FIG. 11 is a schematic structural view of the truss assembly after being disassembled.
FIG. 12 is a schematic structural view of an abutting joint of the truss assembly with an upper end portion and a lower end portion of the original truss of the upgraded escalator according to the present application.

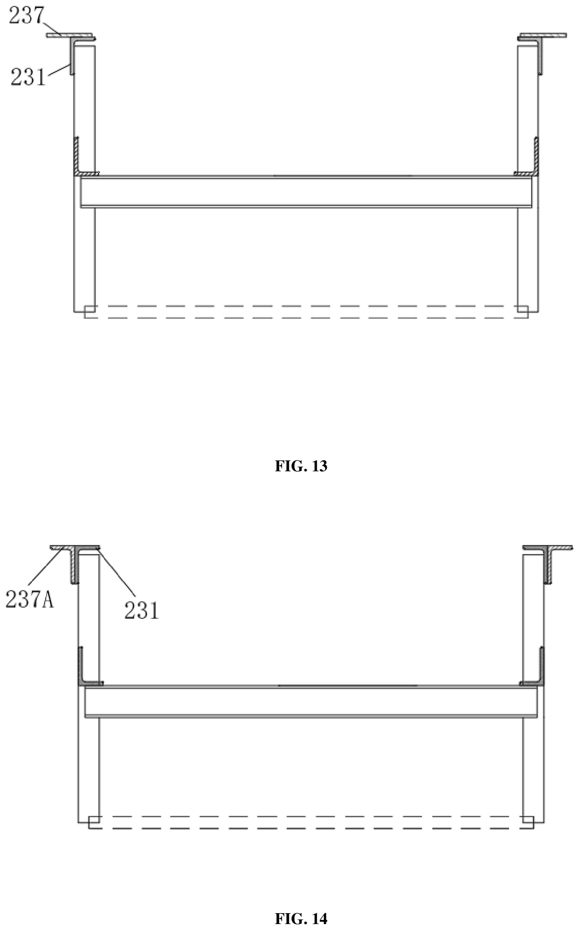

FIG. 13 is a cross sectional view of the middle section with a supporting member.
FIG. 14 is a cross sectional view of a variant of the supporting member of the middle section.

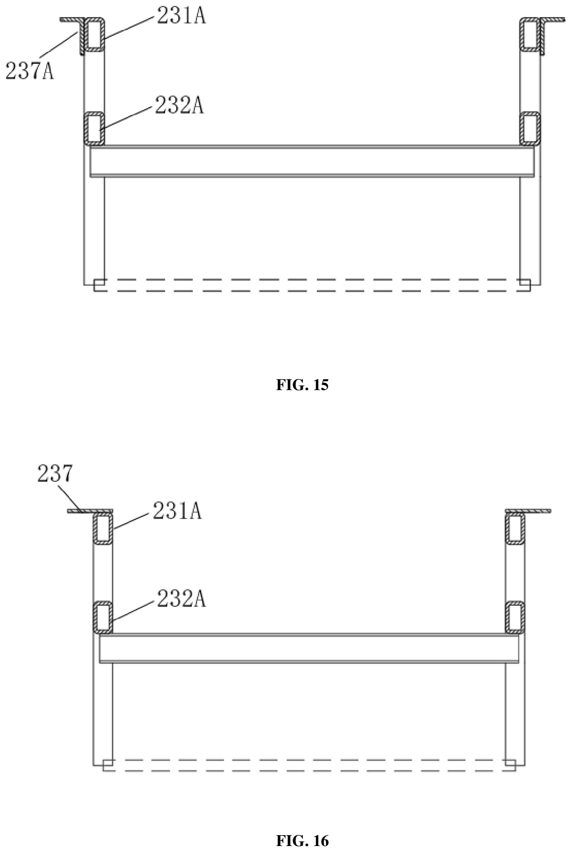

FIG. 15 is a cross sectional view of another variant of the supporting member of the middle section.
FIG. 16 is a cross sectional view of yet another variant of the supporting member of the middle section.

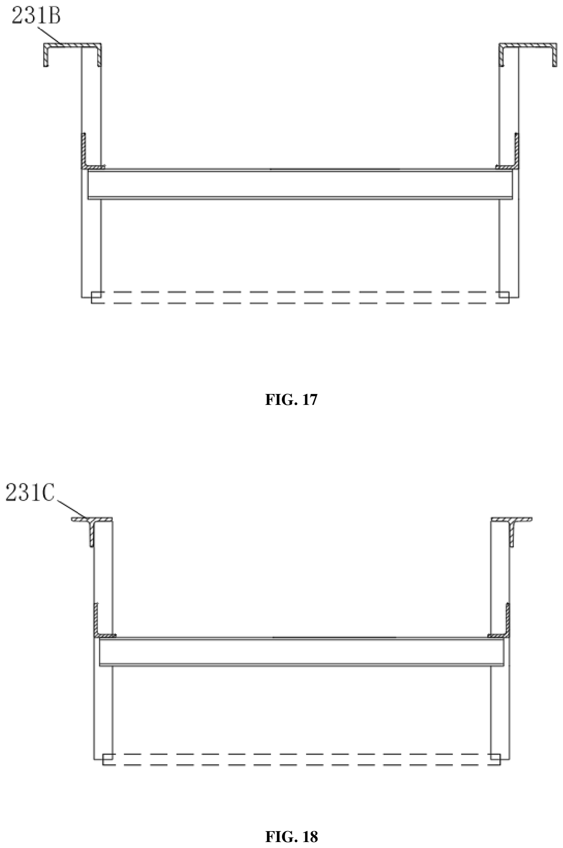

FIG. 17 is a cross sectional view of yet another variant of the supporting member of the middle section.
FIG. 18 is a cross sectional view of yet another variant of the supporting member of the middle section.

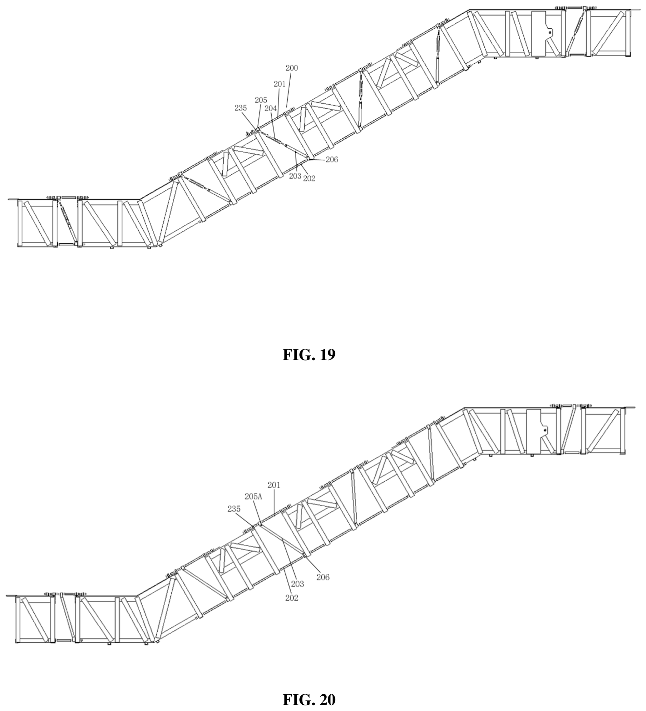

FIG. 19 is a schematic structural view of a connection between sections achieved by a screw rod assembly.
FIG. 20 is a schematic structural view of a variant of the connection between sections achieved by the screw rod assembly.

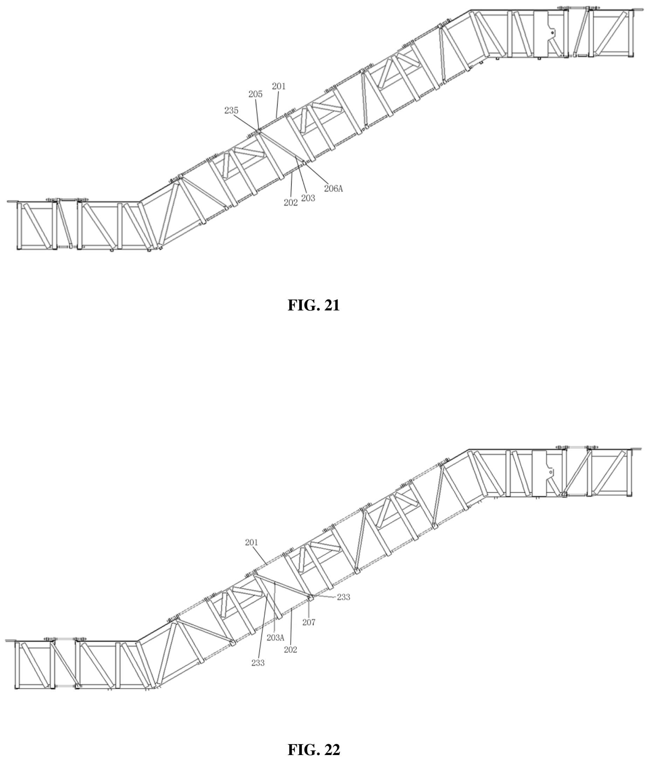

FIG. 21 is a schematic structural view of another variant of the connection between sections achieved by the screw rod assembly.
FIG. 22 is a schematic structural view of yet another variant of the connection between sections achieved by the screw rod assembly.

### DETAILED DESCRIPTION OF THE EMBODIMENTS

Technical solutions in the embodiments of the present application are clearly and completely described hereinafter in conjunction with the drawings in the embodiments of the present application. Apparently, the embodiments described in the following are only some embodiments of the present application, rather than all embodiments. Based on the embodiments in the present application, all of the other embodiments which are obtained by those skilled in the art without any creative work fall within the protection scope of the present application.

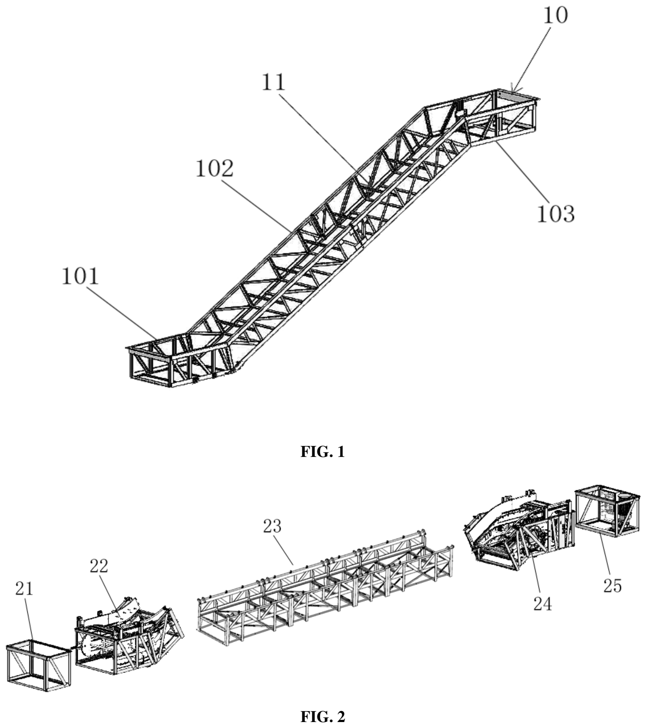

As shown in FIG. 1, an original truss 10 of the original escalator, after other components of an original escalator have been removed, has a lower portion 101, a middle portion 102, and an upper portion 103. The lower portion 101 and the upper portion 103 are parallel and horizontal, and the lower portion 101 and the upper portion 103 are connected to different floors, respectively. The middle portion 102 is obliquely located between the lower portion 101 and the upper portion 103. Bent sections are provided at a junction between the middle portion 102 and the lower portion 101 and a junction between the middle portion 102 and the upper portion 103, respectively. The middle portion 102 of the original truss 10 has multiple transverse bar members 11 that are arranged in parallel.

As shown in FIG. 2, an upgraded escalator is provided in the present application, which includes a truss assembly and multiple components of the original escalator installed in combination with the truss assembly. The multiple components of the original escalator include: stairs, stair guide rails, stair chains, a traction machine, skirt plates, inner and outer cover plates, a handrail system, an electrical control system, etc.. The truss assembly includes a lower machine room 21, a lower turning section 22, at least one flatten middle section group, an upper turning section 24, and an upper machine room 25. Widths of the lower machine room 21, the lower turning section 22, the middle section group, the upper turning section 24 and the upper machine room 25 are all smaller than an inner width of the original truss 10, and the flatten middle section group has a height close to or equaling to a distance between a top edge of the original truss 10 and the transverse bar members 11. That is, the middle section group can be embedded into the original truss 10 without being blocked by the transverse bar members 11. The middle section group has a length not less than a distance between two adjacent transverse bar members 11. The lower machine room 21, the lower turning section 22, the middle section group, the upper turning section 24 and the upper machine room 25 are embedded into corresponding positions of the original truss 10, respectively, and avoid the transverse bar members 11 at corresponding positions, and then other components of the escalator are installed. The upgraded escalator can complete upgrading without the original truss being dismantled, maintaining the strength of the original truss completely. The upgrading is more convenient and efficient and does not cause damage to the building, resulting in lower costs.

Specifically, the lower machine room 21 is embedded into the lower portion 101, the lower turning section 22 is embedded into the junction between the lower portion 101 and the middle portion 102, the middle section group is embedded into the middle portion 102, the upper turning section 24 is embedded into the junction between the middle portion 102 and the upper portion 103, and the upper machine room 25 is embedded into the upper portion 103. In order to improve the strength of the truss assembly, any two adjacent ones of the lower machine room 21, the lower turning section 22, the middle section group, the upper turning section 24 and the upper machine room 25 may be connected by bolt or screw rod structure.

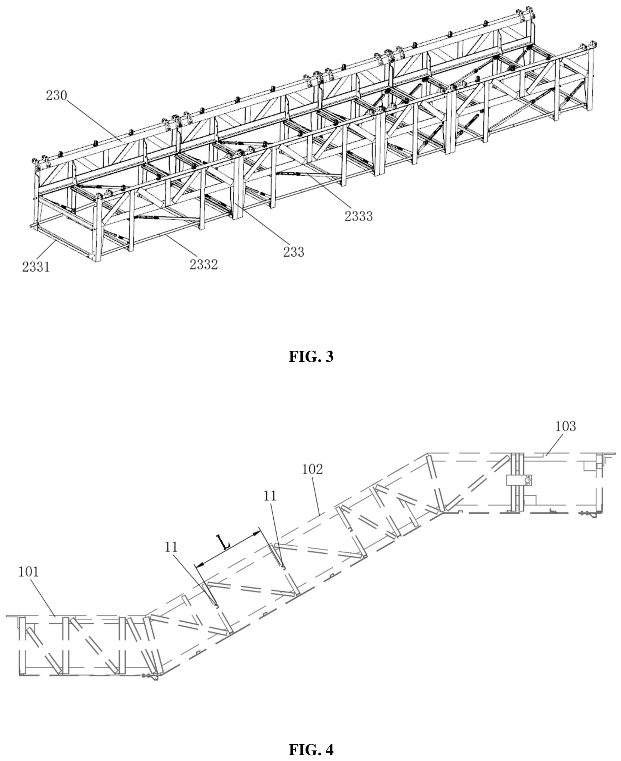

Referring to FIG. 3, the middle section group consists of multiple middle sections 23, which are connected to each other in an end-to-end manner. The multiple middle sections 23 each include an upper flattened body 230, and the upper flattened body 230 has multiple sets of upright bars 233. The multiple sets of upright bars 233 extend beyond the bottom of the upper flattened body 230 to form extension structures. Bottom ends of each set of extension structures are connected to each other through bottom transverse bars 2331, and a longitudinal opening area, which is oriented downwards, is provided between extension structures of each set. The upper flattened bodies 230 of multiple middle sections 23 are connected in an end-to-end manner to form the middle section group. The upper flat body 230 is located above of the transverse bar members 11, and the extension structures are located between the transverse bar members 11 to effectively avoid the transverse bar members 11.

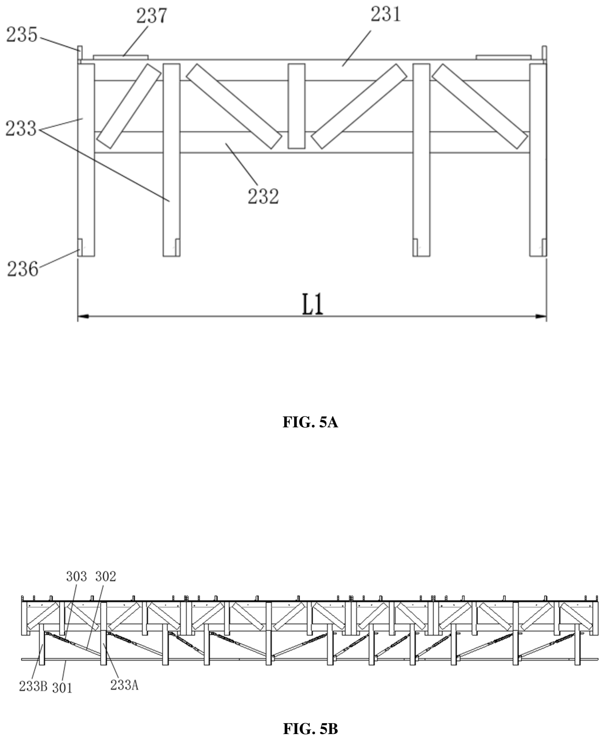

In order to improve the structural stability of the middle sections 23, preferably, multiple supplementary chord members 2332 and diagonal members 2333 are installed among the extension structures. Referring to FIG. 4 and FIG. 5, a length L1 of the middle section 23 may be greater than a spacing distance L between adjacent transverse bar members 11. When the middle sections 23 are embedded into the original truss, the upper flat body 230 is placed on top of the transverse bar members 11, the extension structures are inserted into a spaces among the transverse bar members 11, and opening areas avoid the transverse bar members 11. The number of middle sections can be reduced by increasing the length of the middle section 23, thereby improving the installation accuracy of the upgraded escalator, reducing workload, and improving work efficiency.

Specifically, referring to FIG. 5A and FIG. 6, the upper flattened body 230 is of a rectangular structure, which is composed of upper longitudinal bars 231 on two upper sides of the upper flattened body 230, lower longitudinal bars 232 on two lower sides of the upper flattened body 230, multiple upright bars 233, and multiple middle transverse bars 234. Each set of upright bars 233, the corresponding middle transverse bar 234 and the corresponding bottom transverse bar 2331 form a rectangular extension structure. The upper flattened body 230 and the extension structure are of an integral structure, which has a good stability. The middle section 23 has certain longitudinal and transverse stability and can bear both longitudinal and transverse loads simultaneously.

Two sets of upper connecting lugs 235 are provided at two upper ends of the middle section 23, respectively, and two sets of lower connecting lugs 236 are provided at two lower ends of the middle section 23, respectively. The middle sections 23 are connected to each other through the upper connecting lugs 235 and the lower connecting lugs 236 in combination with bolt assemblies. The middle sections 23 located at both ends of the middle section group are respectively connected to the lower turning section 22 and the upper turning section 24 through the upper connecting lugs 235 and the lower connecting lugs 236 in combination with bolt assemblies.

One end of the diagonal member 2333 is connected to a junction between the upright bar 233 and the upper longitudinal bar 232, and the other end of the diagonal member 2333 is connected to the lower connecting lug 236 of the adjacent upright bar 233 or the nearby area. The inclination direction of the diagonal member 2333 is set according to the direction of the applied force after the middle section 23 is installed in an embedded manner.

Furthermore, referring to FIG. 5B, the upright bar 233 may not extend beyond the bottom of the upper flattened body 230, and the bottom of the upright bar 233 is connected to the extension bar 233A, which extends downward, to form an extension structure. The extension rod 233A may be connected to the upright bar 233 by welding or fasteners. Alternatively, the bottom of the upper flattened body 230 may be connected to an offset bar 233B, which extends downward, at positions other than the upright bar 233 to form an extension structure. The offset bar 233B may be connected to the upper flat body 230 by welding or fasteners. The extension structures in the above forms are more flexible and can be better adapted to different positions of the transverse bar members 11. Furthermore, auxiliary connection assemblies are installed between the extension structures, and the auxiliary connection assemblies include multiple bottom connecting rods 301 at the bottom of multiple extension structures, and multiple auxiliary diagonal members 302. Both ends of each auxiliary diagonal member 302 are respectively connected to two adjacent extension structures. Preferably, an auxiliary tensioner 303 is provided on the auxiliary diagonal member 302.

As shown in FIG. 7A and FIG.7A1, the upper surface of the upper longitudinal bar 231 may be connected to multiple support components 237, which extend outwardly, by welding or fasteners. Or, the upper surface of the upper longitudinal bar 231 may be connected to one support component 237, which is of a strip shape and extends outwardly, by welding or fasteners. A filling member, which may be a support screw 238 or a spacer 238A, may be provided on an upper surface or a lower surface of the support component 237. The middle section 23 may be installed on the original truss 10 with the filling member, and the height of the middle section 23 relative to the original truss 10 can be adjusted by adjusting the filling member. The support component 237 may be a steel plate or an angle steel, etc..

As shown in FIG. 7B and FIG. 7B1, optionally, the adjustor may be provided on an upper surface or a lower surface of the lower longitudinal bar 232. The adjustor may be a support screw 239 or a spacer 239A. The middle section 23 may be installed on the transverse bar members 11 with the adjustor there between. The height of the middle section 23 relative to the original truss 10 can be adjusted by adjusting the filling member.

As shown in FIG. 8, the lower machine room 21, the lower turning section 22, the middle section group, the upper turning section 24, and the upper machine room 25 may be assembled together first and then embedded into the original truss 10 as shown in FIG. 9. As shown in FIG. 10, after the truss assembly is completely embedded into the original truss 10, multiple supplementary chord members 2332 and multiple diagonal members 2333 may be installed between the extension structures. For the convenience of transportation and installation, the truss assembly may be disassembled into the lower machine room 21, the lower turning section 22, the middle section group, the upper turning section 24, and the upper machine room 25 during transportation so as to reduce the footprint.

As shown in FIG. 12, angle steels or L-shaped structural components may be provided at end portions of the lower machine room 21 and the upper machine room 25 to provide support when the lower machine room 21 and the upper machine room 25, which are located at the ends of the truss assembly, are placed into the original truss 10, which facilitates installation and improves overall stability. Specifically, tan angle steel 211 is welded to an upper portion of an end of the lower machine room 21 away from the lower turning section 22. The angle steel 211 may be connected to the end portion of the original truss 10 by bolts or welding. The steel plates may be further installed between the angle steel 211 and the end portion of the original truss 10 to provide support. Correspondingly, the angle steel may be welded to an upper portion of an end of the upper turning section 24 away from the upper machine room 25.

As shown in FIG. 13, the upper longitudinal bar 231 and the lower longitudinal bar 232 both are angle steels, rectangular tubes, or other profiles. The upper surface of the upper longitudinal bar 231 is connected to multiple outwardly extending support components 237 by welding or fasteners. The support components 237, which are steel plates, are connected to the top surface of the upper longitudinal bar 231 by welding or fasteners. The side edge of the support components 237 extends away from the middle section 23.

As shown in FIG. 14, the upper longitudinal bar 231 and the lower longitudinal bar 232 both are angle steels, rectangular tubes, or other profiles. The support components 237A are angle steels, and the side edge of the support component 237A is connected to the side edge of the upper longitudinal bars 231 by welding or fasteners. The transverse edge of the support component 237A extends away from the middle section 23.

As shown in FIG. 15, the upper longitudinal bar 231A and the lower longitudinal bar 232A both are rectangular tubes, and the support component 237A is an angle steel. The side edge of the support component 237A is connected to the side edge of the upper longitudinal bar 231A by welding or fasteners. The transverse edge of the support component 237A extends away from the middle section 23.

As shown in FIG. 16, the upper longitudinal bar 231A and the lower longitudinal bar 232A both are rectangular tubes, and the support component 237 is steel plate. The support component 237 is connected to the top surface of the upper longitudinal bar 231A by welding or fasteners, and the side edge of the support component 237 extends away from the middle section 23.

As shown in FIG. 17, the upper longitudinal bar 231B is a C-shaped steel and is opened downwards.

As shown in FIG. 18, the upper longitudinal bar 231B is T-shaped steel, and one side edge of the upper longitudinal bar 231B extends away from the middle section 23.

Further, in order to ensure the overall strength of the truss assembly and avoid deformation and displacement of the truss assembly, any two adjacent ones of the lower machine room 21, the lower turning section 22, the multiple middle sections 23, the upper turning section 24 and the upper machine room 25 may be connected by a screw assembly 200. Specifically, as shown in FIG. 19, the screw assembly 200 includes multiple upper connecting rods 201, multiple lower connecting rods 202, and multiple diagonal members 203. The two ends of the upper connecting rod 201 are respectively connected to the upper sides of end portions of two adjacent sections and fastened by nuts. The two ends of the lower connecting rod 202 are respectively connected to the lower sides of end portions of the two adjacent sections and fastened by nuts. The diagonal members 203 are obliquely arranged between the end portions of two sections. One end of the diagonal member 203 is connected to the upper connecting rod 201 through an upper connector 205 and the other end of the diagonal member 203 is connected to the lower connecting rod 202 through a lower connector 206. The upper connector 205 and the lower connector 206 are respectively in contact with two adjacent sections and fastened by nuts. For the convenience of installation and adjustment of tension degree, the diagonal member 203 is equipped with a tensioner 204.

As a variant, as shown in FIG. 20 and FIG. 21, the upper connector 205A and the lower connector 206A may not be in contact with the sections. Furthermore, one end of the diagonal member 203 is connected to the upper side of the end portion of one section, and the other end of the diagonal member 203 is connected to the lower side of the end portion of another section. One end of the diagonal member 203 is adjustably connected to one section through a bolt group 207, and the end of the diagonal member 203 is fixedly connected to the section by welding after adjustment.

According to the above description of the disclosed embodiments, those skilled in the art may implement or practice the present application. Many modifications to these embodiments are apparent for those skilled in the art. The general principles defined herein may be applied to other embodiments without departing from the spirit or scope of the present application. Therefore, the present application should not be limited to the embodiments disclosed herein, but has the widest scope in accordance to the principle and the novel features disclosed herein.

## Claims

1. An upgraded escalator installed in combination with an original truss of an original escalator, wherein the original truss is provided with a plurality of transverse bar members, the upgraded escalator comprises:
a truss assembly; and
a plurality of components of the upgraded escalator installed in combination with the truss assembly,
the truss assembly comprises a lower machine room, a lower turning section, a middle section group, an upper turning section, and an upper machine room;
the truss assembly has a transverse width less than an inner transverse width of the original truss, and when the truss assembly is embedded into the original truss, the truss assembly avoids the plurality of traverse rod members;
the middle section group comprises a plurality of middle sections, which are connected to each other in an end-to-end manner; and
each of the plurality of middle sections comprises an upper flattened body, the upper flattened body has a plurality sets of upright bars, the plurality sets of upright bars extend beyond a bottom of the upper flattened body to form a plurality of extension structures, and upper flattened bodies of the plurality of middle sections are connected to each other in an end-to-end manner to form the middle section group.

2. The upgraded escalator according to claim **1,** wherein
the upper flattened body is of a longitudinal rectangular structure, which comprises upper longitudinal bars on two upper sides of the upper flattened body, lower longitudinal bars on two lower sides of the upper flattened body, and the plurality sets of upright bars; and
longitudinal rectangular structures at two sides and the plurality of transverse bar members form a groove structure that is opened upwards.

3. The upgraded escalator according to claim **1,** wherein
a plurality of supplementary chord members and a plurality of diagonal members are installed among the plurality of extension structures; and
the plurality of supplementary chord members and the plurality of diagonal members are screw rod assemblies, profiles of angle steels, or structural components having a tension function.

4. The upgraded escalator according to claim **1,** wherein
upper connecting lugs are provided at two sides of two upper ends of each of the plurality of middle sections, respectively, and lower connecting lugs are provided at two sides of two lower ends of each of the plurality of middle sections, respectively; and
the plurality of middle sections are connected to each other through the upper connecting lugs and the lower connecting lugs in combination with bolt assemblies, and the middle sections located at two ends of the middle section group are respectively connected to the lower turning section and the upper turning section through the upper connecting lugs and the lower connecting lugs in combination with bolt assemblies.

5. The upgraded escalator according to claim **1,** wherein
bottom ends of the plurality of extension structures that are spaced apart are connected by lower longitudinal bars, and longitudinal opening areas, which are opened downwards, are provided among the plurality of extension structures.

6. The upgraded escalator according to claim 5, wherein
bottom portions of the plurality sets of upright bars are connected to a plurality of extension bars to form the plurality of the extension structures.

7. The upgraded escalator according to claim 5, wherein
the plurality of extension bars below bottoms of the upper flattened bodies are offset with the plurality sets of upright bars on the upper flattened bodies, the plurality of extension bars are connected to and fixed to lower upright bars of the upper flattened bodies by welding or fasteners, and the plurality of extension bars are connected to the plurality sets of upright bars of the upper flattened bodies in an offset manner.

8. The upgraded escalator according to claim 5, wherein
auxiliary connection assemblies are installed among the plurality of extension structures.

9. The upgraded escalator according to claim 5, wherein
upper surfaces of the upper longitudinal bars are connected to a plurality of support components, which extends outwardly, by welding or fasteners, or the upper surfaces of the upper longitudinal bars are connected to one support component, which has a strip shape and extends outwardly, by welding or fasteners; and
filling members are installed on upper surfaces or lower surfaces of the plurality of support components, the filling members are support screws or spacers, and the plurality of middle sections are installed on the original truss by the filling members.

10. The upgraded escalator according to claim 5, wherein
filling members are provided on upper surfaces or lower surfaces the lower longitudinal bars, the filling members are support screws or spacers, and the plurality of middle sections are installed on the plurality of transverse bar members by the filling members.

11. The upgraded escalator according to claim 5, wherein
the upper longitudinal bars and the lower longitudinal bars are angle steels, rectangular tubes, or other profiles, and the upper surfaces of the upper longitudinal bars are connected to a plurality of support components, which extends outwardly, by welding or fasteners;
the plurality of support components are steel plate, and side edges of the plurality of support components extend away from the plurality of middle sections; and
filling members are installed on upper surfaces or lower surfaces of the plurality of support components, the filling members are support screws or spacers, and the plurality of middle sections are installed on the original truss with the filling members.

12. The upgraded escalator according to claim 5, wherein
the upper longitudinal bars and the lower longitudinal bars are angle steels, rectangular tubes, or other profiles, side surfaces of the plurality of the upper longitudinal bars are connected to the support components, which extends outwardly, by welding or fasteners, and the plurality of support components are angle steels or other profiles.

13. The upgraded escalator according to claim 5, wherein
the upper longitudinal bars are C-shaped steel or T-shaped steel; and
when the upper longitudinal bars are C-shaped steel, the upper longitudinal bars are opened downwards, and when the upper longitudinal bars are T-shaped steel, side edges of the upper longitudinal bars extend away from the plurality of middle sections.

14. The upgraded escalator according to claim 1, wherein
angle steels or L-shaped structural components are provided at end portions of the lower machine room and the upper machine room, so as to provide support when the lower machine room and the upper machine room are placed into the original truss.

15. The upgraded escalator according to claim **1,** wherein
any two adjacent ones of the lower machine room, the lower turning section, the plurality of flatten middle sections, the upper turning section and the upper machine room are connected by a plurality of screw assemblies, the plurality of screw assemblies comprise a plurality of upper connecting rods, a plurality of lower connecting rods, and a plurality of diagonal members;
two ends of each of the plurality of upper connecting rods are respectively connected to upper sides of end portions of two adjacent sections, and two ends of each of the plurality of lower connecting rods are respectively connected to lower sides of end portions of two adjacent sections;
each of the plurality of diagonal members of the plurality of screw assemblies is obliquely arranged between end portions of two corresponding sections;
one end of each of the plurality of diagonal members of the plurality of screw assemblies is connected to a corresponding one of the plurality of upper connecting rods through an upper connector, and the other end of each of the plurality of diagonal members of the plurality of screw assemblies is connected to a corresponding one of the plurality of lower connecting rods through a lower connector; or one end of each of the plurality of diagonal members of the plurality of screw assemblies is connected to an upper side of an end portion of one section, and the other end of each of the plurality of diagonal members of the plurality of screw assemblies is connected to a lower side of an end portion of another section; and
an inclination direction of each of the plurality of diagonal members of the plurality of screw assemblies is variable according to requirements of structural load.
